# EUROPEAN PATENT APPLICATION

(11) **EP 4 708 405 A1**
(43) Date of publication of application: **11.03.2026**
(21) Application number: 25192029.4
(22) Date of filing: 28.07.2025
(51) Int. Cl.: H01M 4/70, H01M 4/74, H01M 10/0585, H01M 50/105, H01M 50/26

(54) **BATTERY CELL MANUFACTURING METHOD AND BATTERY CELL**

(30) Priority: 02.08.2024 JP 2024127920
(71) Applicant: MAZDA MOTOR CORPORATION, Hiroshima 730-8670 (JP)
(72) Inventor: Kajimoto, Takanori, Fuchu-cho, Aki-gun,, 730-8670 (JP)
(74) Representative: Müller-Boré & Partner Patentanwälte PartG mbB

(57) **Abstract**

[Problem] To reduce insufficient welding of resins at the time of manufacturing of a battery cell.

[Means for Solution] A method of manufacturing a battery cell 1 includes: layering electrode sheets 3 and 4 in a layering direction L, the electrode sheets 3 and 4 each having an electrode 32 or 42 placed in a container 10 and a current collector 31 or 41 that is connected to the electrode in the container and protrudes to the outside through an opening 12 or 13 of the container; applying pressure and heat to a resin 51 placed between the current collector and the current collector layered on each other from outer sides toward a center in the layering direction L; causing the resin being melted to flow through a through hole 34 formed in the current collector in the layering direction L and fill the through hole; and welding the resin between the current collector and the current collector and sealing the opening of the container.

## Description

### [Technical Field]

The technology disclosed herein relates to a battery cell manufacturing method and a battery cell.

### [Background Art]

Patent Literature 1 describes a conventional laminated battery. The conventional laminated battery is a battery in which an electrode body is housed in an exterior member. The conventional laminated battery includes a plurality of current-collecting terminals extracted from the electrode body to the outside of the exterior member. The plurality of current-collecting terminals are layered with thermoplastic resins interposed therebetween. The thermoplastic resins are welded to the exterior member in the peripheral portion of the exterior member, thereby closing the peripheral portion of the exterior member. In the conventional laminated battery, each of the plurality of current-collecting terminals is extracted to the outside of the exterior member, and the plurality of current-collecting terminals are not connected to each other inside the exterior member. In the conventional laminated battery, the space inside the exterior member can be utilized for enlargement of the electrode body, which is advantageous for improvement in the energy density of the battery.

### [Citation List]

### [Patent Literature]

[Patent Literature 1] JP 2009 - 272 161 A

### [Summary of Invention]

### [Problem to be Solved by the Invention]

The conventional laminated battery is manufactured through a heat-sealing process. In the heat-sealing process, thermoplastic resins layered in the peripheral portion of the exterior member are welded to each other by means of hot plates pressed in the layered direction, which serve as an energy supply source.

In this regard, in the case of increasing the current collectors in a battery cell having the same structure as that of the conventional laminated battery, a large number of layered resins need to be welded at the time of manufacturing of the battery cell. In the case where the number of layered resins is large, resins placed near the center in the layering direction are far away from the energy supply source. This entails a risk of insufficient welding of the resins near the center due to insufficient supply of energy to the resins placed near the center.

An object of the present invention is to reduce insufficient welding of the resins at the time of manufacturing of the battery cell.

Another object of the present invention is to provide an improved battery cell manufacturing method, in particular to provide a manufacturing method for improved and/or reliably sealing layered electrodes in a container of a battery cell.

Another object of the present invention is to provide an improved battery cell, in particular to provide a battery cell with an improved and/or reliable sealing for layered electrodes in a container of the battery cell.

The technology disclosed herein in particular reduces insufficient welding of the resins at the time of manufacturing of the battery cell.

The technology disclosed herein in particular allows to provide an improved and/or reliable sealing for the battery cell, in particular for layered electrodes in a container of the battery cell.

The technology disclosed herein accordingly provides for an improved battery cell and for an improved battery cell manufacturing method.

### [Means for Solving the Problem]

The technology disclosed herein relates to a battery cell manufacturing method. The manufacturing includes, in particular in this sequence:
layering electrode sheets in a layering direction, the electrode sheets each having an electrode placed in a container and a current collector that is connected to the electrode in the container and protrudes to the outside through an opening of the container;
applying pressure and heat to a resin placed between the current collector and the current collector layered on each other from outer sides toward a center in the layering direction;
causing the resin being melted to flow through a through hole formed in the current collector in the layering direction and fill the through hole; and
welding the resin between the current collector and the current collector and sealing the opening of the container.

The respective current collector in particular protrudes out of the container or in other words to the outside of the container through the opening of the container.

In other words, the step of applying pressure and heat may comprise applying pressure and heat to a resin placed between adjacent current collectors in the layering direction.

In still other words, the step of applying pressure and heat may comprise applying pressure and heat to current collectors layered on each other from outer sides of the layered current collectors in the layering direction toward a center of the layered current collectors in the layering direction.

The step of causing the resin being melted to flow through a through hole formed in the current collector may, in other words, comprise melting the resin to flow through a through hole formed in the current collector, in particular through a through hole formed in the respective current collector.

The step of welding the resin may, in other words, comprise welding the resin between adjacent current collectors in the layering direction to seal the opening of the container.

The electrode sheets may include one or more first electrode sheets and one or more second electrode sheets. The electrode sheets may particularly include at least two first electrode sheets and one or more second electrode sheets. The first electrode sheet(s) and the second electrode sheet(s) are alternately layered in the layering direction.

The battery cell manufacturing method may, in other words, comprise, in particular in this sequence:
layering a plurality of electrode sheets in a layering direction, the electrode sheets of the plurality of electrode sheets each having an electrode placed in a container and having a current collector that is connected to the electrode in the container and that protrudes to the outside of the container through an opening of the container;
applying pressure and heat to resin placed between the current collectors of the plurality of layered electrode sheets from outer sides of the container toward a center of the plurality of layered electrode sheets in the layering direction;
melting the resin to flow through a through hole formed in a respective current collector in the layering direction and to fill the through hole; and
welding the resin between adjacent current collectors to seal the opening of the container.

Regarding the battery cell manufactured by this manufacturing method, each of the plurality of current collectors layered on each other protrudes through the opening of the container to the outside of the container. The plurality of current collectors are connected to the electrodes of the same polarity, for example. Inside the container, the plurality of current collectors may particularly not be connected to each other.

Connection space for the current collector inside the container may be omitted. In other words, no connectors for connecting the current collectors inside of the container may be provided.

The electrodes of the battery cell can be enlarged by utilizing the space inside the container. With this, the energy density of the battery cell can be increased.

The opening of the container may be sealed by the resin. The resin is, for example, a thermoplastic resin.

At the time of manufacturing the battery cell, pressure and heat may be applied to the resin placed between the current collector and the current collector layered on each other from the outer sides toward the center in the layering direction.

For example, hot plates for applying heat to the resins are placed on the outer sides in the layering direction, in particular on outer sides of the container in the layering direction, for example on outer sides of a laminate material of the container in the layering direction, and supply thermal energy from the outer sides toward the center, in particular toward the center in the layering direction.

The thermal energy supplied to the resins placed near the center in the layering direction tends to be lower than the thermal energy supplied to the resins placed on the outer sides in the layering direction because of attenuation.

Insofar a resin or the resin is mentioned, it has to be understood that this may relate to a plurality of resins. The resins of the plurality of resins may respectively be disposed between adjacently layered current collectors in the layering direction.

A resin of the plurality of resins may also be disposed between an uppermost current collector in the layering direction and the container, for example a laminate material of the container and/or between a lowermost current collector in the layering direction and the container, for example a laminate material of the container.

In this regard, the current collectors have the through holes. Melted resins flow in the layering direction through the through holes formed in the current collectors. Since the thermal energy is conducted by the resins flowing from the outer sides toward the center in the layering direction, attenuation of the energy is reduced.

In addition, since the melted resins pass through the through holes of the current collectors, the distance of heat transfer is substantially short, and at the same time, the heat transmission paths formed by the resins are not divided by the current collectors but continue from the outer sides toward the center in the layering direction.

The resins placed near the center in the layering direction are sufficiently supplied with the thermal energy. All the resins can be sufficiently welded to the current collectors. Insufficient welding of the resins at the time of manufacturing of the battery cell is reduced. The layered electrode sheets can reliably be housed and, in particular, be reliably sealed in the container.

Each of the electrode sheets may have the resin that is bonded in advance on a first surface in the layering direction of the current collector and may be free from the resin on a second surface opposite to the first surface in the layering direction, and
optionally, the resin on the first surface may flow through the through hole to the second surface at the time of application of pressure and heat in the layering direction and be welded to the current collector facing the second surface between the second surface and the current collector.

The electrode sheet may have the resin only on one side of the current collector. In the group of electrode sheets layered in the layering direction, the total thickness of the resins is small. Since the distance of heat transfer is short, the thermal energy is sufficiently supplied to even the resins near the center in the layering direction at the time of application of pressure and heat to the resins.

In addition, the resin on the first surface flows through the through holes toward the second surface, and is welded to the current collector facing the second surface between the second surface and the current collector.

Although the electrode sheet may have the resin only on one side of the current collector, the resin is welded to the current collector on both sides of the current collector and thereby the opening of the container is sealed.

Providing the resin only on one side may enhance a targeted heating of the resin when applying pressure and heat, and may secure a flow of the melted resin toward the other side of the respective current collector in the layering direction.

In some embodiments, the current collectors may have a raised portion rising from an opening edge of the through hole. The raised portion may be buried in the resin, for example in a state after welding.

In some embodiments, the raised portion may be a burr which is for example generated at a time when the through hole is formed in the current collector by machining.

The manufacturing method may include a step of machining one or more through holes in each of the current collectors.

The machining of one or more through holes in each of the current collectors may include a formation of a raised portion, for example a burr, at an edge of the respective through hole.

The raised portion which may particularly correspond to a burr formed when machining efficiently enhances the mechanical fixture of the electrode sheets relative to the resin and in particular relative to the container.

In some embodiments, the battery cell manufacturing method may further comprise a step of aligning the through holes of the current collectors, for example substantially in the layering direction.

This efficiently enhances the flow of the resin which in turn may provide for an improved housing of the layered electrode sheets.

In some embodiments, the battery cell manufacturing method comprises a step of rolling a roller having pins attached thereto on a first and/or a second surface of the current collector to form the through holes, in particular to form the through holes with a raised portion rising from an opening edge of the respective through hole.

In some embodiments, the battery cell manufacturing method may comprise a step of rolling a pair of facing rollers having pins attached thereto on a first and a second surface of the current collector to form the through holes, in particular to form the through holes with a raised portion rising from an opening edge of the respective through hole.

In other words, the battery cell manufacturing method may comprise a step of rolling a pair of opposed rollers having pins attached thereto on a first and a second surface of the current collector to form the through holes, in particular to form the through holes with a raised portion rising from an opening edge of the respective through hole.

Rolling with a roller or a pair of rollers advantageously allows to efficiently provide the current collectors with through holes, in particular to provide the current collectors with through holes having a raised portion rising in opposite directions from the through holes.

In some embodiments, in a state before welding of resin, each of the current collectors has the resin bonded on only one of a first surface and a second surface of the current collector, the second surface being opposite the first surface in the layering direction.

This advantageously enhances a targeted melting of the resin and secures the formation of a flow through the respective through hole.

In alternative embodiments, in a state before welding of resin, each of the electrode sheets has the resin bonded on both of the first surface and the second surface of the current collector.

This advantageously simplifies the manufacturing, as the electrode sheets may be added to the layer upside-down without affecting the overall layup of the layered electrode sheets.

In some embodiments, in a state before welding of resin, an inside of the through hole is not filled with the resin.

Additionally or alternatively, in a state before welding of resin, a first resin on a first surface of the current collector may be discontinues with a second resin on a second surface of the current collector, the second surface being opposite the first surface in the layering direction.

This advantageously secures a flow of melted resin through the through hole and an enhanced temperature transport between the respective layers of electrode sheets and/or resin in particular via the flow of melted resin.

In some embodiments, in a state after welding of resin, the inside of the through hole is filled with the resin to be continues with each of a first resin on a first surface of the current collector and a second resin on a second surface of the current collector, the second surface being opposite the first surface in the layering direction. In particular, just after welding of the resin an inside of the through hole may be filled with the resin to be continues with each of the first resin and the second resin.

This advantageously secures the current collectors to the container in a sealed manner.

The technology disclosed herein relates to a battery cell. The battery cell includes:
a container that houses electrodes;
a plurality of current collectors that are connected to the electrodes in the container and, in a state of being layered in a layering direction, protrude to the outside of the container through an opening of the container; and
a resin that seals the opening of the container and is welded to the current collectors between the current collectors being layered on each other, wherein
the current collectors each have a first surface, a second surface opposite to the first surface in the layering direction and, in a portion interposed between a first resin being in contact with the first surface and a second resin being in contact with the second surface, at least one through hole that penetrates the current collector in the layering direction, and
an inside of the through hole is filled with a resin being continues with each of the first resin and the second resin.

In other words, a battery cell may comprise:
a container that houses a plurality of electrodes;
a plurality of current collectors that are connected to the plurality of electrodes in the container and that are layered in a layering direction, wherein the current collectors protrude to an outside of the container through an opening of the container; and
a resin that seals the opening of the container and that is welded to adjacently layered current collectors,
wherein the current collectors each have a first surface, a second surface opposite to the first surface in the layering direction and, in a portion interposed between a first resin being in contact with the first surface and a second resin being in contact with the second surface, at least one through hole that penetrates the respective current collector in the layering direction, and
wherein an inside of the through hole is filled with a resin being continues with each of the first resin and the second resin.

In the battery cell manufactured by the manufacturing method described earlier, the inside of the through hole of the current collector is filled with the resin that continues to each of the first resin and the second resin. Insufficient welding of the resins at the time of manufacturing of the battery cell is reduced. The quality of the battery cell is stable.

Particular features, embodiments and respective advantages of the battery cell accordingly apply to the battery cell manufacturing method and vice versa.

The current collectors may have a raised portion rising from an opening edge of the through hole in at least one of the first surface and the second surface, and
the raised portion may be buried in the first resin or the second resin.

The raised portion buried in the first resin or the second resin enhances the strength against separation between the current collector and the resin welded to the current collector, due to an anchoring effect.

The raised portion may be, for example, a burr generated at the time when the through hole is formed in the current collector by machining.

The burr generated at the time of machining may, when separated from the current collector, cause a short circuit in electrodes inside the container.

In general, burrs are removed from the current collector after the through holes are formed.

In contrast, in the battery cell manufacturing method described earlier, the burrs may be buried in the resin and therefore do not serve as a contaminant in the battery cell.

In the battery cell manufacturing method, a process of removing the burrs can be omitted.

In some embodiments, the through holes of the current collectors are aligned substantially in the layering direction or in the layering direction. The through holes may particularly be aligned in the layering direction at the opening or at respective openings of the container.

The alignment advantageously reduces the flowing distances of the melted resin and in turn further increases the temperature transport in particular via the melted resin.

In some embodiments, the container is formed by folding a single laminate material or by layering two laminate materials into a bag-like shape.

Optionally, the laminate material may have a three-layered structure in which both sides of a metal layer are interposed between resin layers of the container.

The metal layer of the container may comprise or consist of aluminum and/or stainless steel. The resin layers of the container may comprise or consist of polypropylene (PP) and/or polyethylene (PE).

Additionally or alternatively, the resin which seals the opening may comprise or consist of a cast polypropylene (CPP), low-density polyethylene (LDPE), liner low-density polyethylene (LLDPE), high-density polyethylene (HDPE), oriented polypropylene (OPP), polyethylene terephthalate (PET) and/or oriented nylon (ONY).

### [Advantageous Effect of Invention]

According to the above-described battery cell manufacturing method and battery cell, in particular insufficient welding of resins at the time of manufacturing of the battery cell can be reduced.

The layered electrode sheets may be reliably housed and, in particular, be reliably sealed and/or fixed in the container.

Accordingly, an improved battery cell manufacturing method, as well as an improved battery cell which particularly includes layered electrode sheets may be provided.

### [Brief Description of Drawings]

FIG. 1 is a sectional view of a battery cell.
FIG. 2 illustrates part of a procedure for manufacturing an electrode sheet.
FIG. 3 illustrates part of the procedure for manufacturing the electrode sheet.
FIG. 4 is a perspective view illustrating a surface of a current collector in which through holes are formed.
The left view of FIG. 5 illustrates a state before welding of resins for sealing an opening portion of a container, whereas the right view illustrates a state after welding of the resins.
FIG. 6 is a sectional view illustrating welding interfaces between the current collector and the resins in an enlarged manner.

### [Mode for Carrying Out the Invention]

Hereinafter, embodiments of a battery cell manufacturing method and a battery cell will be described with reference to the drawings. The battery cell manufacturing method and battery cell described herein are merely examples.

### (Structure of battery cell)

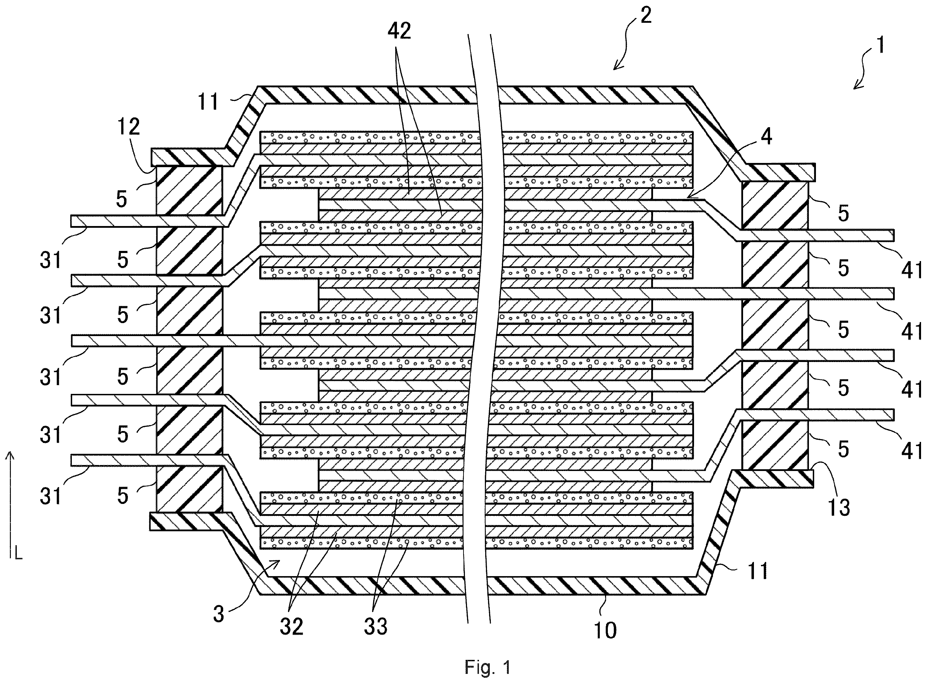

FIG. 1 schematically illustrates a whole structure of a battery cell 1. The battery cell 1 may be a secondary battery.

The battery cell 1 is, for example, a lithium-ion battery.

A container 10 of the battery cell 1 may be formed by folding a single laminate material 11 or layering two laminate materials 11 into a bag-like shape.

The laminate material 11 has, for example, a three-layered structure in which both sides of a metal layer are interposed between resin layers. The metal layer is, for example, aluminum or stainless steel. The resin layer is, for example, polypropylene (PP) or polyethylene (PE).

The container 10 may be sealed airtightly in a state where a power generating element 2 and an electrolyte are housed therein. The battery cell 1 may be a so-called pouch-type battery.

The battery cell 1 may be a battery cell of a car battery.

The power generating element 2 has first electrode sheets 3 and second electrode sheets 4. At least one of the first and second electrode sheet 3, 4 may include two or more electrode sheets 3, 4.

The first electrode sheets 3 are, for example, negative-electrode sheets. The second electrode sheets 4 are, for example, positive-electrode sheets.

The first electrode sheets 3 and the second electrode sheets 4 may be alternately layered. A resin 5 may be disposed in between each pair of alternately layered electrode sheets 3, 4, in particular between each pair of alternately layered current collectors 31 ,41. Additionally, a resin 5 may be disposed between an uppermost electrode sheet 3 in the layering direction 10 and the container 10, and/or between a lowermost electrode sheet 4 in the layering direction L and the container 10. In other words, a resin 5 may additionally be disposed between an uppermost current collector 31, 41 in the layering direction L and the container 10, and/or between a lowermost current collector 31, 41 in the layering direction L and the container 10.

The power generating element 2 may have any number of first electrode sheets 3 or second electrode sheets 4.

The power generating element 2 is an electrode-layered product. Note that, in the following, the direction in which the first electrode sheets 3 and the second electrode sheets 4 are layered on each other may be referred to as a layering direction L.

The first electrode sheet 3 has a current collector 31. The current collector 31 may be a thin plate material or foil extending in a direction orthogonal to the layering direction L.

The layering direction L may be substantially perpendicular to a planar extension of the current collector(s) 31, 41, and/or may be substantially perpendicular to a planar extension of the electrode sheet(s) 3, 4.

A first end portion, that is, the left end portion in FIG. 1 of the current collector 31 may protrude through a first opening 12 of the container 10 to the outside of the container 10.

A first surface and a second surface of the current collector 31 placed inside the container 10 may be at least partially coated or coated with an active material. The first surface is the upper surface of the current collector 31 in FIG. 1, and the second surface is the lower surface of the current collector 31 in FIG. 1. The active material may form a first electrode 32.

The current collector 31 is connected to the first electrode 32.

The first electrode sheet 3 may have a separator 33. The separator 33 separates the first electrode 32 of the first electrode sheet 3 and a second electrode 42, which will be described later, of the second electrode sheet 4 from each other.

The separator 33 is, for example, a porous material through which an ionic material can permeate. The separator 33 may cover the surface of each of the two first electrodes 32 of the first electrode sheet 3. The area of the separator 33 may be larger than the area of the first electrode sheet 3.

The second electrode sheet 4 has a current collector 41. The current collector 41 may be a thin plate material or foil extending in the direction substantially orthogonal to the layering direction L.

A second end portion, that is, the right end portion in FIG. 1 of the current collector 41 may protrude through a second opening 13 of the container 10 to the outside of the container 10.

The second opening 13 may be an opening opposite to the first opening 12 about the direction orthogonal to the layering direction L.

Note that the direction in which the current collector 41 protrudes is not limited to the direction opposite to the direction in which the current collector 31 protrudes.

A first surface and a second surface of the current collector 41 placed inside the container 10 are at least partially coated or coated with an active material.

The active material may form the second electrode 42.

The current collector 41 is connected to the second electrode 42.

As described earlier, the first electrode sheets 3 and the second electrode sheets 4 may be alternately layered. The first electrodes 32 and the second electrodes 42 are layered in the layering direction L inside the container 10 in particular with the separator 33 interposed therebetween.

The first opening 12 of the container 10 may be sealed with a resin 5. The resin 5 may be placed between the laminate material 11 and the current collector 31, and between the current collectors 31. In other words, the resin 5 may be placed between the laminate material 11 and the respective current collector 31 at an end or at respective ends of the layered electrode sheets 3, 4 in the layering direction L, and may be placed between respective adjacent current collectors 31 in the layering direction L.

Similarly, the second opening 13 may be sealed with the resin 5. The resin 5 may be placed between the laminate material 11 and the current collector 41, and between the current collectors 41. In other words, the resin 5 may be placed between the laminate material 11 and the respective current collector 41 at an end or at respective ends of the layered electrode sheets 3, 4 in the layering direction L, and may be placed between respective adjacent current collectors 41 in the layering direction L.

The plurality of current collectors 31 may not be connected inside the container 10, but in particular may individually protrude to the outside of the container 10.

The plurality of current collectors 41 may also not be connected inside the container 10, but in particular may individually protrude to the outside of the container 10.

Since the connection space for the current collectors 31 and 41 inside the container 10 can be omitted, the area for the first electrodes 32 and the second electrodes 42 can be increased by the omitted space. As a result, the energy density of the battery cell 1 can be increased.

### (Electrode sheet manufacturing method)

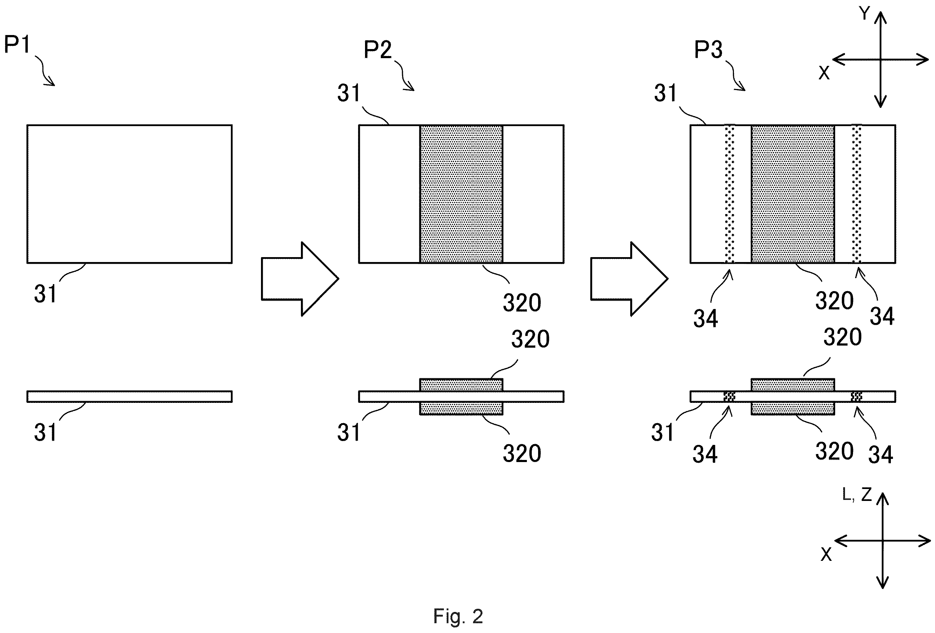

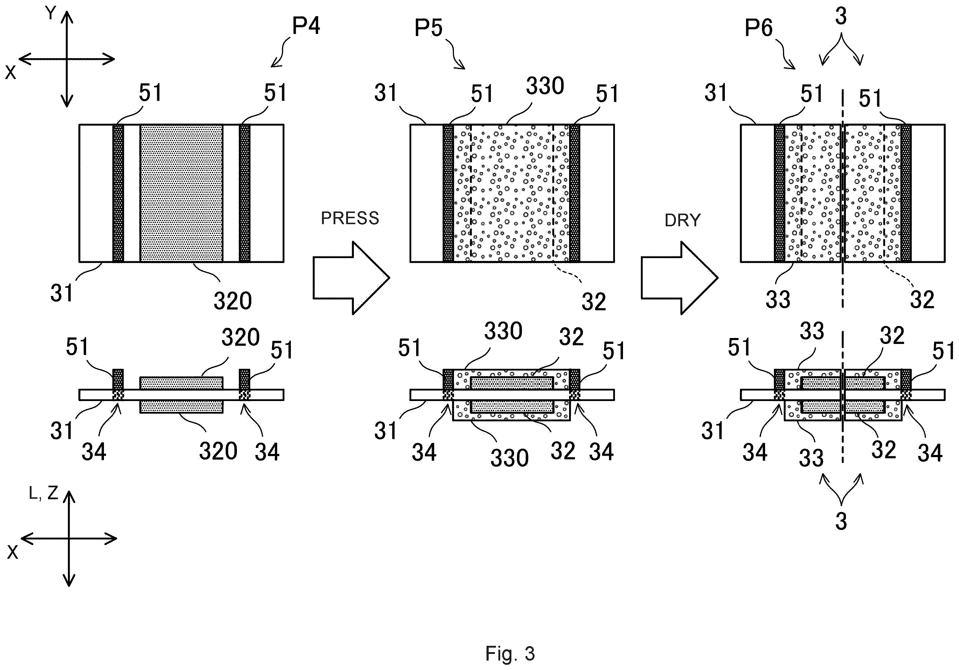

FIGS. 2 and 3 illustrate a procedure for manufacturing the electrode sheet. FIGS. 2 and 3 illustrate an exemplary procedure for manufacturing the first electrode sheet 3. Said procedure for manufacturing the first electrode sheet 3 may be part of a battery cell manufacturing method and, for example, be performed before layering the electrode sheets 3, 4 in the layering direction L.

Note that a procedure for manufacturing the second electrode sheet 4 may be the same as the procedure for manufacturing the first electrode sheet 3, except that a fifth process P5 for forming the separator 33, described later, is omitted. That is, through holes, described later, may be formed also in the current collector 41 of the second electrode sheet 4.

Accordingly, the procedure for manufacturing the second electrode sheet 4 may comprise or consist of the same steps as the procedure for manufacturing the first electrode sheet 3, in particular except that a fifth process P5 for forming the separator 33, described later, is omitted, and in particular except that the respective steps are performed on the electrode sheet 4.

In a first process P1, the current collector 31 may be prepared. In the case where the first electrode sheet 3 is a negative-electrode sheet, the current collector 31 is, for example, a copper foil.

The current collector 31 has, for example, such a shape that is longer in the X direction than in the Y direction. The X direction is the left-right direction in the drawing plane of FIG. 2 or 3. The Y direction is the direction orthogonal to the X direction, and is the up-down direction in the drawing plane of FIG. 2 or 3. This is because, as described later, the electrode sheet may be to be cut in the middle with respect to the X direction. Note that cutting in the middle is not essential for manufacturing of the electrode sheet.

In a second process P2, an active material 320 may be applied to each of the first surface and the second surface of the current collector 31. The active material 320 may be applied to the center portion in the X direction of the current collector 31.

In a third process P3, a plurality of through holes 34 may be formed in the current collector 31. The through holes 34 may penetrate the current collector 31 substantially in the thickness direction (that is, Z direction), and open on the first surface and the second surface of the current collector 31.

The through holes 34 may be formed on both sides of the active material 320 interposed in the X direction and may be spaced apart from the active material 320. In other words, the through holes 34 may be formed on both sides of the active material 320 with the active material 320 interposed between the through holes 34, for example in particular in the X direction.

Multiple through holes 34 may be formed in the current collector 31, and the region where the through holes 34 are formed may extend in the Y direction.

The through holes 34 can be formed by, for example, relatively rolling a roller having pins attached thereto on the surface of the current collector 31.

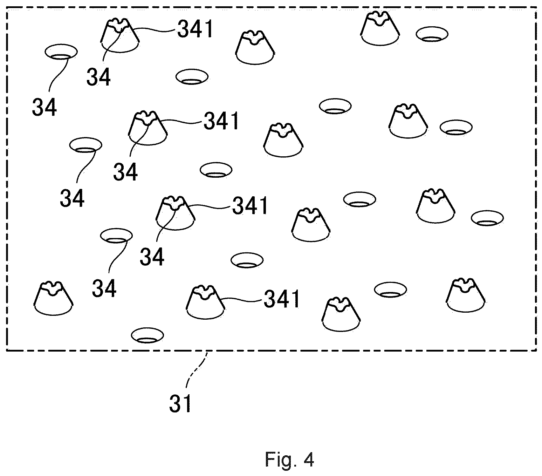

FIG. 4 shows an example of the through holes 34 formed on the current collector 31. Machining for example with use of pins may cause burrs 341 raised from opening edges of the through holes 34 to be generated on the surface of the current collector 31.

The burrs 341 may serve as raised portions 341 which exert an anchoring effect, as described later, and therefore the burrs 341 may not be removed from the current collector 31. In this regard, the roller may be rolled on each of the first surface and the second surface of the current collector 31. With this, the burrs 341 may be generated on each of the first surface and the second surface of the current collector 31.

Note that the formation of the through holes 34 may be performed before the active material 320 is applied to the current collector 31.

In a fourth process P4 of FIG. 3, a resin 51 may be applied to the first surface of the current collector 31. The resin 51 may be applied to the region where the through holes 34 are formed. In other words, the resin 51 may be applied to the first surface of the current collector 31 for example at a position at which the through hole 34 is formed.

The resin 51 may form the resin 5 that seals the opening 12, 13 or openings 12 and 13 of the container 10.

The resin 51 may be a thermoplastic resin. The resin 51 may be selected from, for example, cast polypropylene (CPP), low-density polyethylene (LDPE), liner low-density polyethylene (LLDPE), high-density polyethylene (HDPE), oriented polypropylene (OPP), polyethylene terephthalate (PET) or oriented nylon (ONY).

The resin 51 may not be applied to the second surface of the current collector 31.

After the application of the active material 320 and the application of the resin 51 are completed, the current collector 31 may be pressed by, for example, passing through a pair of rollers.

The first electrode 32 may be formed on each of the first surface and the second surface of the current collector 31. In addition or alternatively, the resin 51 may be welded on the first surface of the current collector 31.

Note that the second process P2 in which the active material 320 is applied and the fourth process P4 in which the resin 51 is applied may be exchanged. Alternatively, the application of the active material 320 and the application of the resin 51 may for example be performed simultaneously.

In the fifth process P5, films 330 that form the separators 33 may be bonded to the current collector 31. The film 330 may be bonded to at least the principal surface of the first electrode 32 on the first surface and/or the principal surface of the first electrode 32 on the second surface of the current collector 31.

Note that the principal surface of the first electrode 32 is a surface that is opposed to the second electrode 42 with the separator 33 interposed therebetween.

Note that, in the fifth process P5, the separators 33 may be formed by application of slurry to the current collector 31. The slurry may be applied to at least the principal surface of the first electrode 32 on the first surface and/or the principal surface of the first electrode 32 on the second surface of the current collector 31.

After the application of the slurry, the slurry may be dried, thereby forming the separators 33.

After each of the first electrodes 32, the resin 51, and the separators 33 is formed on the current collector 31 so that the electrode sheet is completed, the electrode sheet may be cut in the middle with respect to the X direction in a sixth process P6 (see the long dashed double-short dashed line). In this manner, the two first electrode sheets 3, 3 can be produced.

### (Battery cell manufacturing method)

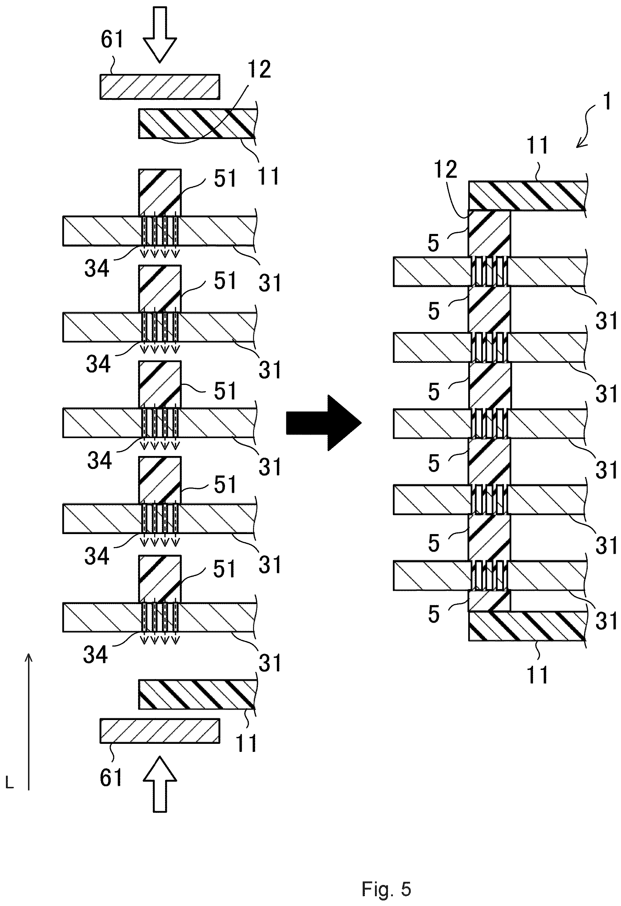

Next, with reference to FIG. 5, the method of manufacturing the battery cell 1 will be described. Here, although the method of manufacturing the battery cell 1 will be described taking the welding of the resin in the first opening 12 as an example, the welding of the resin in the second opening 13 may be performed in a similar manner.

First, the first electrode sheets 3 and the second electrode sheets 4 may be prepared. The first electrode sheet 3 may have, as described earlier, the current collector 31, the first electrodes 32, the separators 33, and/or the resin 51. The second electrode sheet 4 may have the current collector 41, the second electrodes 42, and/or the resin 51.

The first electrode sheets 3 and the second electrode sheets 4 may be alternately layered.

The first electrode 32 and the second electrode 42 may be layered on each other with the separator 33 interposed.

The power generating element 2 having the plurality of first electrode sheets 3 and the plurality of second electrode sheets 4 is formed.

As illustrated in the left view of FIG. 5, the resin 51 may be placed between the first end portion and the first electrode 32 in the current collector 31 of the first electrode sheet 3. The resin 51 may be welded only on the first surface of the current collector 31.

In the power generating element 2, the through holes 34 and/or the resins 51 may be aligned in the layering direction L. In addition, the resin may also be placed between the second end portion and the second electrode 42 in the current collector 41 of the second electrode sheet 4.

After the power generating element 2 is formed, the power generating element 2 may be covered with the laminate material 11.

The edges of the laminate material 11 may be, as illustrated in the left view of FIG. 5, on the positions corresponding to the resins 51 aligned in the layering direction L, and may be placed on the outer sides relative to the current collectors 31 that are placed on the outermost sides with respect to the layering direction L.

That is, in the left view of FIG. 3, the edges of the laminate material 11 may respectively be placed in the position above the current collector 31 that is placed on the uppermost side and the position below the current collector 31 that is placed on the lowermost side with respect to the up-down direction.

Note that the resin 51 may be provided on the edges of the laminate material 11.

Next, the resins 51 aligned in the layering direction L may be welded to each other.

Here, the resins 51 may be subjected to hot-plate welding.

Specifically, as shown by the white arrows in the left view of FIG. 5, two hot plates 61 and 61 placed on the outer sides of the laminate material 11 may apply pressure and heat to the resins 51 aligned in the layering direction L from the outer sides toward the center in the layering direction L.

Thermal energy from the two hot plates 61 and 61 may be transmitted through the laminate material 11, the resins 51, and the current collectors 31 from the outer sides toward the center in the layering direction L, and the resins 51 may melt by receiving the thermal energy.

In this regard, as shown by the broken arrows in the left view of FIG. 5, the melted resin 51 on the first surface may flow through the through holes 34 of the current collector 31 in the layering direction L, and may reach the second surface from the first surface.

The resin 51 may be, on the second surface, welded to the current collector 31 facing the second surface between the second surface and the current collector 31.

In this way, as illustrated in the right view of FIG. 5, the portions between the laminate material 11 and the current collector 31 and/or the portions between the current collectors 31 may be sealed by the resins 5 being welded in the opening (here, the first opening 12) of the container 10.

As described earlier, the current collector 31 has the through holes 34. The melted resin 51 may flow in the layering direction L through the through holes 34 formed in the current collector 31.

Since the thermal energy is conducted by the resins 51 flowing from the first surfaces toward the second surfaces and/or from the outer sides toward the center in the layering direction L, attenuation of the energy is reduced.

In addition, since the melted resins 51 pass through the through holes 34, substantial distance of heat transfer is short. Furthermore, the heat transmission paths formed by the resins 51 are not divided by the current collectors 31, but continue from the first surfaces toward the second surfaces and/or from the outer sides toward the center in the layering direction L.

The resins 51 placed near the center in the layering direction L are sufficiently supplied with the thermal energy from the hot plates 61 on the outer sides in the layering direction L. All the resins 51 are sufficiently welded to the current collectors 31 or the laminate material 11. Insufficient welding of the resins 51 at the time of manufacturing of the battery cell 1 is reduced.

In addition, the electrode sheet may have the resin 51 only on one side (here, the upper surface) of the current collector 31. In the group of electrode sheets layered in the layering direction L, the total thickness of the resins 51 is small.

Since the distance of heat transfer is short, the thermal energy is sufficiently supplied to even the resins 51 near the center in the layering direction L. The quality of the battery cell 1 manufactured is stable. Note that the electrode sheet, in particular each of the electrode sheets 3, 4 may have the resin 51 only on the lower surface of the current collector 31. Alternatively or additionally, one or more of the electrode sheets 3, 4 may have the resin 51 on both sides of the current collector 31. Further alternatively or additionally, at an area of the opening, a resin may be disposed at the container 10 at a face facing the layered current collectors 31, 41, in particular at one or both faces facing the layered current collectors 31, 41 in the layering direction L. The resin disposed at the container 10 may be different from the resin as disposed on the current collectors 31, 41.

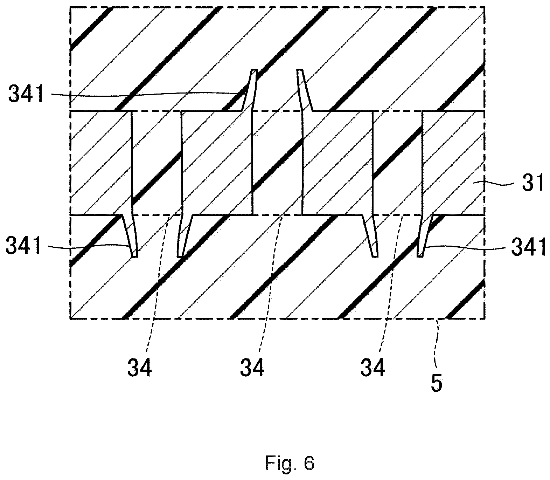

In addition, as illustrated in FIG. 6 in an enlarged manner, the burrs 341 of the current collector 31 may be buried in the resin 5. The burrs, namely the raised portions 341 buried in the resin 5 enhance the strength against separation between the resin 5 and the current collector 31 due to an anchoring effect.

Note that, in FIG. 6, the resin above the current collector 31 may correspond to the first resin, and the resin below the current collector 31 may correspond to the second resin.

Since the burrs 341 generated at the time of machining of the through holes 34 are in a state of being buried in the resin 5 after the manufacturing of the battery cell 1, the burrs 341 do not fall off from the current collector 31. Since the burrs 341 do not serve as a contaminant in the battery cell 1, a process of removing the burrs 341 from the current collector 31 at the time of manufacturing of the electrode sheet can be omitted.

### [Reference Signs List]

- 1: Battery cell
- 10: Container
- 3: First electrode sheet
- 31: Current collector
- 32: First electrode
- 34: Through hole
- 341: Burr (Raised portion)
- 4: Second electrode sheet
- 41: Current collector
- 42: Second electrode
- 5: Resin
- 51: Resin
- L: layering direction
- X: X direction
- Y: Y direction
- Z: Z direction, thickness direction

## Claims

1. A battery cell (1) manufacturing method comprising:
layering electrode sheets (3, 4) in a layering direction (L), the electrode sheets (3, 4) each having an electrode (32, 42) placed in a container (10) and a current collector (31, 41) that is connected to the electrode (32, 42) in the container (10) and protrudes to the outside through an opening of the container (10);
applying pressure and heat to a resin (51) placed between the current collector (31, 41) and the current collector (31, 41) layered on each other from outer sides toward a center in the layering direction (L);
causing the resin (51) being melted to flow through a through hole (34) formed in the current collector (31, 41) in the layering direction (L) and fill the through hole (34); and
welding the resin (51) between the current collector (31, 41) and the current collector (31, 41) and sealing the opening (12, 13) of the container (10).

2. The battery cell manufacturing method according to claim 1, wherein
each of the electrode sheets (3, 4) has a resin (51) that is bonded in advance on a first surface in the layering direction (L) of the current collector (31, 41) and is free from a resin (51) on a second surface opposite to the first surface in the layering direction (L).

3. The battery cell manufacturing method according to claim 2, wherein the resin (51) on the first surface flows through the through hole (34) to the second surface at the time of application of pressure and heat in the layering direction (L) and is welded to the current collector (31, 41) facing the second surface between the second surface and the current collector (31, 41).

4. The battery cell manufacturing method according to any one of the claims 1 to 3, wherein the current collectors (31, 41) have a raised portion (341) rising from an opening edge of the through hole (34), wherein the raised portion (341) is buried in the resin (51).

5. The battery cell manufacturing method according to claim 4, wherein the raised portion (341) is a burr (341) which is generated at a time when the through hole (34) is formed in the current collector (31, 41) by machining.

6. The battery cell manufacturing method according to any one of the claims 1 to 5, further comprising a step of aligning the through holes (34) of the current collectors (31, 41) substantially in the layering direction (L).

7. The battery cell manufacturing method according to any one of the claims 1 to 6, further comprising a step of rolling a roller having pins attached thereto on a first and/or a second surface of the current collector (31, 41) to form the through holes (34).

8. The battery cell manufacturing method according to any one of the claims 1 to 7, further comprising a step of rolling a pair of facing rollers having pins attached thereto on a first and a second surface of the current collector (31, 41) to form the through holes (34).

9. The battery cell manufacturing method according to any one of the claims 1 to 8, wherein in a state before welding of resin (5), each of the current collectors (31, 41) has the resin bonded on only one of the first surface and the second surface.

10. The battery cell manufacturing method according to any one of the claims 1 to 9, wherein in a state before welding of resin (5), an inside of the through hole (34) is not filled with the resin (5).

11. The battery cell manufacturing method according to any one of the claims 1 to 10, wherein in a state before welding of resin (5), a first resin (5) on a first surface of the current collector (31, 41) is discontinues with a second resin (5) on a second surface of the current collector (31, 41), the second surface being opposite the first surface in the layering direction (L).

12. The battery cell manufacturing method according to any one of the claims 1 to 11, wherein in a state after welding of resin (5), an inside of the through hole (34) is filled with the resin (5) to be continues with each of a first resin (5) on a first surface of the current collector (31, 41) and a second resin (5) on a second surface of the current collector (31, 41), the second surface being opposite the first surface in the layering direction (L).

13. A battery cell (1) comprising:
a container (10) that houses electrodes (32, 42);
a plurality of current collectors (31, 41) that are connected to the electrodes (32, 42) in the container (10) and, in a state of being layered in a layering direction (L), protrude to the outside of the container (10) through an opening (12, 13) of the container (10); and
a resin (5) that seals the opening (12, 13) of the container (10) and is welded to the current collectors (31, 41) between the current collectors (31, 41) being layered on each other, wherein
the current collectors (31, 41) each have a first surface, a second surface opposite to the first surface in the layering direction (L) and, in a portion interposed between a first resin (5) being in contact with the first surface and a second resin (5) being in contact with the second surface, at least one through hole (34) that penetrates the current collector (31, 41) in the layering direction (L), and
an inside of the through hole (34) is filled with a resin (5) being continues with each of the first resin (5) and the second resin (5).

14. The battery cell (1) according to claim 13, wherein
the current collectors (31, 41) have a raised portion (341) rising from an opening edge of the through hole (34) in at least one of the first surface and the second surface, and
the raised portion (341) is buried in the first resin (5) or the second resin (5).

15. The battery cell (1) according to claim 13 or 14,
wherein the through holes (34) of the current collectors (31, 41) are aligned substantially in the layering direction (L).
